# FASCICULE DE BREVET EUROPEEN

(11) **EP 0 404 617 B1**
(45) Date de publication et mention de la délivrance du brevet: **01.12.1993**
(21) Numéro de dépôt: 90401457.8
(22) Date de dépôt: 31.05.1990
(51) Int. Cl.: B60T 8/18

(54) **Correcteur de freinage**
Bremsdrucksteuerventil
Brake pressure corrector

(30) Priorité: 22.06.1989 IT 6750789
(43) Date de publication de la demande: 27.12.1990
(73) Titulaire: AlliedSignal Freni S.p.A., 70026 Modugno (IT)
(72) Inventeur: Tribuzio, Pasquale, Bendix Europe, F-93700 Drancy (FR); Mercieri, Francesco Nicola, Bendix Europe, F-93700 Drancy (FR)
(74) Mandataire: Bentz, Jean-Paul

(56) Documents cités:
- EP-A- 0 046 659
- EP-A- 0 082 044
- DE-A- 2 638 190
- DE-A- 3 615 154
- GB-A- 1 161 829

## Description

La présente invention concerne un correcteur de freinage pour véhicule automobile, comprenant un corps percé d'un alésage dans lequel un joint annulaire définit des première et seconde chambres dont la première est reliée à un circuit d'un maître-cylindre et la seconde à au moins un moteur de frein, un piston formant clapet mobile en translation axiale dans une entretoise annulaire en appui contre le joint annulaire, le piston présentant un diamètre supérieur à celui de l'orifice central du joint annulaire qui forme siège de clapet, et étant pourvu d'un poussoir qui traverse ledit joint annulaire et ladite première chambre et fait saillie de façon étanche hors du corps, l'ensemble constitué par ledit joint annulaire et ladite entretoise annulaire étant monté mobile en translation axiale et ladite seconde chambre comprenant en outre un moyen élastique confiné entre ladite entretoise annulaire et le fond dudit alésage.

Un tel correcteur de freinage est décrit dans le document EP-A-0 082 044.

On sait que la courbe caractéristique d'un tel correcteur est constituée par la fonction de la pression de sortie par rapport à la pression d'entrée, c'est à dire la fonction de la pression régnant dans la seconde chambre par rapport à celle régnant dans la première chambre. Cette courbe est constituée par deux segments de droite de pentes différentes reliés en un point nommé "point de coupure" à partir duquel la pression augmente moins vite dans la seconde chambre que dans la première chambre.

La présente invention a pour but d'ajoindre au correcteur décrit ci-avant, un moyen permettant de mieux approximer la courbe idéale.

Selon l'invention, on atteint ce but en donnant au dit joint annulaire une élasticité suffisante pour que sa partie externe se déplace par rapport à sa partie interne à température ambiante.

L'invention sera mieux comprise et d'autres buts, avantages et caractéristiques de celle-ci apparaitront plus clairement à la lecture de la description qui suit d'un mode de réalisation préféré à laquelle deux planches de dessins sont joints sur lesquels :
- la Figure 1 est une vue schématique en coupe d'un correcteur conforme à la présente invention ; et
- la Figure 2 représente schématiquement la courbe caractéristique d'un correcteur (idéale, avec et sans le moyen selon l'invention).

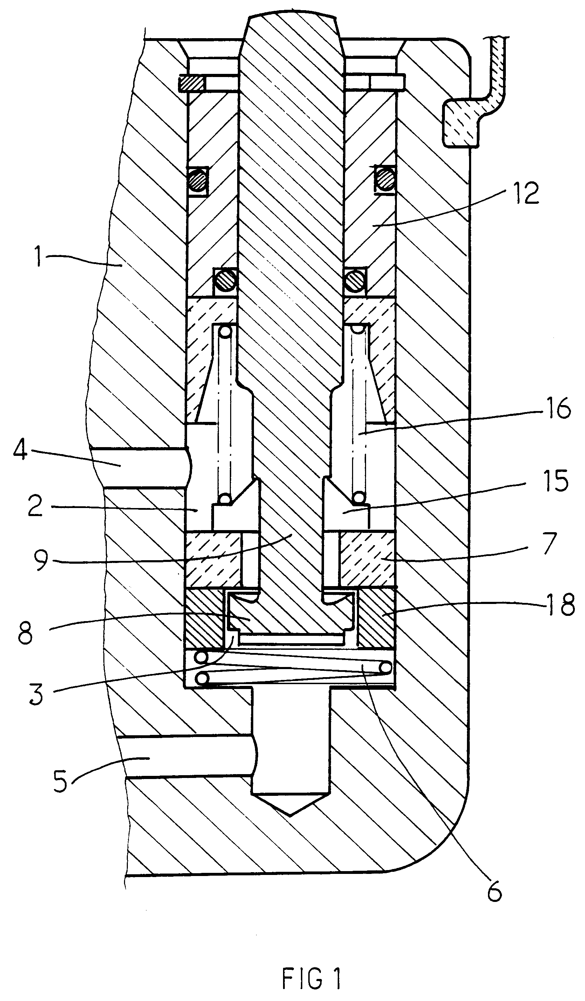

En référence maintenant à la Figure 1, on a représenté un correcteur de freinage du type précité qui agit en fonction de la charge du véhicule ainsi équipé.

De façon connue, ce correcteur comprend un corps 1 dans lequel a été pratiqué un alésage. Un joint annulaire 7 percé d'un orifice central détermine deux chambres dans cet alésage.

La première chambre 2 est reliée par un conduit 4 à une chambre de pression d'un maître-cylindre, tandis que la seconde chambre 3 est reliée par un conduit 5 à au moins un moteur de frein.

Le joint annulaire 7 constitue un siège pour un clapet constitué par un piston 8 pourvu d'un poussoir 9. On sait qu'à l'extrémité du poussoir 9 est appliquée une force représentative de la charge du véhicule. Ce poussoir 9 traverse donc l'orifice central du joint annulaire 7, la chambre 2 et un bouchon 12 fermant l'alésage duquel il fait saillie. Le piston 8 est mobile en translation axiale dans une entretoise annulaire 18 qui s'appuie contre le joint annulaire 7. En position de repos, tel que représenté sur la Figure 1, un ressort hélicoïdal 16 disposé dans la première chambre 2 maintient le clapet ouvert en s'appuyant d'une part sur le bouchon 12 et d'autre part sur une butée annulaire 15 dont est pourvu le poussoir 9, cette butée annulaire 15 venant en appui sur le joint annulaire 7 et étant disposée de façon à ce que le piston 8 ne ferme pas l'orifice central du joint annulaire 7.

Conformément à l'invention, l'ensemble constitué par l'entretoise annulaire 18 et le joint annulaire 7 est monté mobile en translation axiale, et un moyen élastique tel qu'un ressort hélicoïdal 6 est disposé entre l'entretoise annulaire 18 et le fond de l'alésage dans la seconde chambre 3.

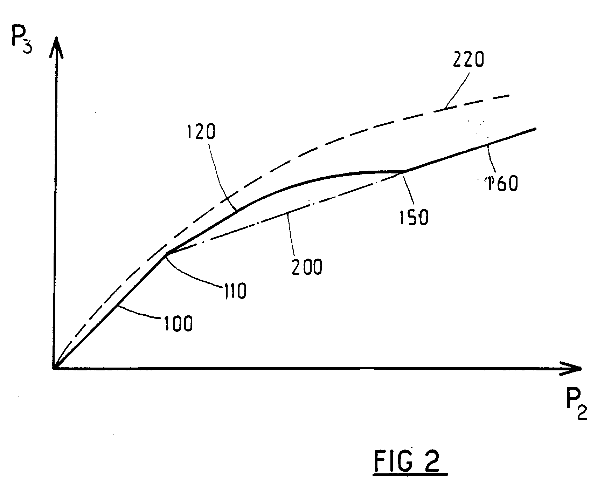

Ainsi, au repos, les chambres 2 et 3 communiquent-elles par l'orifice central du joint annulaire 7. Lorsque la pression du fluide de freinage augmente dans le maître-cylindre, c'est à dire dans la chambre 2, la pression dans un premier temps, augmente identiquement dans la chambre 3 et, par suite, dans les moteurs de freins qui lui sont reliés, puisque les deux chambres communiquent (partie 100 de la courbe représentée Figure 2). Lorsque la pression augmente dans la chambre 2, on atteint le point de coupure 110 pour lequel le clapet se ferme. Le produit de la pression régnant dans les chambres par la section de l'alésage du bouchon 12 est alors égale à la somme de la force externe appliquée au poussoir du piston en fonction de la charge du véhicule et de la force interne exercée par le ressort 16.

A partir de ce point 110, dans un premier temps une augmentation de la pression dans la première chambre 2 se traduit par un déplacement axial de l'ensemble constitué par le joint annulaire 7, l'entretoise annulaire 18, ce qui est rendu possible du fait de l'élasticité du joint annulaire 7 dont la partie interne reste en appui contre le piston 8 et la partie externe se déplace. Le piston 8 reste immobile et maintient fermé l'orifice central du joint annulaire 7. Ce déplacement axial est obtenu à l'encontre du ressort 6 disposé dans la seconde chambre 3. On a alors une augmentation de la pression dans la seconde chambre 3, fonction du rapport des sections utiles et de la raideur du ressort 6 (partie 120 de la courbe représentée Figure 2).

Si la pression continue à augmenter dans la chambre 2, on atteint le point 130 de la courbe représentée le ressort 6 est complètement écrasé ; l'entretoise annulaire 18 et, par suite, le joint annulaire 7, sont en butée et ne peuvent plus se déplacer. Par réaction élastique du joint annulaire 7 et sous l'effet de la pression, le piston 8 se déplace encore pour augmenter la pression dans la seconde chambre 3.

Si la pression dans la première chambre 2 continue à augmenter, on atteint le point 150 de la courbe pour lequel le clapet s'ouvre à nouveau. La caractéristique du correcteur devient alors identique à celle d'un correcteur classique (courbe 200 représentée Figure 2) et fonction seulement du rapport des surfaces utiles, la pression dans la seconde chambre augmentant linéairement mais moins rapidement que celle régnant dans la première chambre.

Au relâchement de la pédale de frein, les phases décrites précédemment se succèdent dans l'ordre inverse et le correcteur revient au repos comme représenté Figure 1.

On a représenté Figure 2, la courbe caractéristique idéale d'un correcteur de freinage sous la référence 220, courbe qui a une forme sensiblement parabolique. On constate aisément que l'adjonction du moyen élastique 6 dans la seconde chambre permet d'obtenir une meilleure la courbe caractéristique du correcteur qui approche mieux la courbe idéale 220 par rapport à celle 200 d'un correcteur classique. Bien évidement l'homme du métier aura compris que la rigidité ou l'élasticité du joint annulaire 7 a un rôle important pour la continuité de la courbe caractéristique.

Selon un mode de réalisation préféré, le joint annulaire 7 est en élastomère du type styrène-butadienne présentant une dureté comprise entre 40 et 85 Shores à température ambiante.

## Revendications

1. Correcteur de freinage pour véhicule automobile, comprenant un corps (1) percé d'un alésage dans lequel un joint annulaire (7) définit des première et seconde chambres (2, 3) dont la première (2) est reliée à un circuit d'un maître-cylindre et la seconde (3) à au moins un moteur de frein, un piston (8) formant clapet mobile en translation axiale dans une entretoise-annulaire (18) en appui contre le joint annulaire (7), le piston (8) présentant un diamètre supérieur à celui de l'orifice central du joint annulaire (7) qui forme siège de clapet, et étant pourvu d'un poussoir (9) qui traverse ledit joint annulaire (7) et ladite première chambre (2) et fait saillie de façon étanche hors du corps (1), l'ensemble constitué par ledit joint annulaire (7) et ladite entretoise annulaire (18) étant monté mobile en translation axiale et ladite seconde chambre (3) comprenant en outre un moyen élastique (6) confiné entre ladite entretoise annulaire (18) et le fond dudit alésage, caractérisé en ce que le dit joint annulaire (7) présente une élasticité suffisante pour que sa partie externe se déplace par rapport à sa partie interne à température ambiante.

2. Correcteur selon la revendication 1, caractérisé en ce que ledit moyen élastique (6) est constitué par un ressort hélicoïdal.

## Patentansprüche

1. Bremskraftregler für ein Kraftfahrzeug, mit einem Gehäuse (1), welches von einer Bohrung durchbrochen ist, in der eine ringförmige Dichtung (7) eine erste und eine zweite Kammer (2, 3) abgrenzt, von denen die erste (2) mit einem Kreis eines Hauptzylinders und die zweite (3) mit wenigstens einem Bremsantrieb verbunden ist, einem Kolben (8), der ein bewegbares Ventilelement bildet, das sich axial translatorisch in einem ringförmigen Zwischenstück (18) bewegt, das sich gegen die ringförmige Dichtung (7) abstützt, wobei der Kolben (8) einen größeren Durchmesser aufweist als die Mittelöffnung der ringförmigen Dichtung (7), die den Ventilsitz bildet, und mit einem Stößel (9) versehen ist, der sich durch die ringförmige Dichtung (7) und die erste Kammer (2) erstreckt und aus dem Gehäuse (1) hervorsteht, wobei der Austritt des Stößels aus dem Gehäuse abgedichtet ist, und wobei die von der ringförmigen Dichtung (7) und dem ringförmigen Zwischenstück (18) gebildete Einheit axial translatorisch bewegbar angebracht ist und die zweite Kammer (3) außerdem ein elastisches Mittel (6) enthält, das zwischen dem ringförmigen Zwischenstück (18) und dem Boden der Bohrung eingeschlossen ist, dadurch gekennzeichnet, daß die ringförmige Dichtung (7) eine ausreichende Elastizität aufweist, damit sich ihr Außenbereich bezüglich ihres Innenbereiches bei Umgebungstemperatur verschiebt.

2. Regler nach Anspruch 1, dadurch gekennzeichnet, daß das elastische Mittel (6) eine Schraubenfeder ist.

## Claims

1. Brake regulator for a motor vehicle, comprising a body (1) pierced with a bore in which an annular gasket (7) defines first and second chambers (2, 3), of which the first (2) is connected to the circuit of a master cylinder and the second (3) to at least one brake motor, and a valve-forming piston (8) movable in axial translational motion in an annular spacer (18) bearing against the annular gasket (7), the piston (8) having a diameter larger than that of the central orifice of the annular gasket (7) forming a valve seat, and being equipped with a pusher (9) which passes through said annular gasket (7) and said first chamber (2) and projects sealingly from the body (1), the assembly consisting of said annular gasket (7) and said annular spacer (18) being mounted so as to be movable in axial translational motion and said second chamber (3) also comprising an elastic means (6) confined between said annular spacer (18) and the bottom of said bore, characterized in that said annular gasket (7) has a sufficient elasticity to ensure that its outer part moves relative to its inner part at ambient temperature.

2. Regulator according to Claim 1, characterized in that said elastic means (6) consists of a helical spring.
